(19) Europäisches Patentamt / European Patent Office / Office européen des brevets

(11) **EP 4 529 032 A1**

(12) **EUROPEAN PATENT APPLICATION**
published in accordance with Art. 153(4) EPC

(43) Date of publication:
**26.03.2025 Bulletin 2025/13**

(21) Application number: **23834714.0**

(22) Date of filing: **29.06.2023**

(51) International Patent Classification (IPC):
**H04B 7/0408** (2017.01)

(52) Cooperative Patent Classification (CPC):
**H04B 7/0408**

(86) International application number:
**PCT/CN2023/103889**

(87) International publication number:
**WO 2024/007947 (11.01.2024 Gazette 2024/02)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **08.07.2022 CN 202210801700**
**02.08.2022 CN 202210922110**

(71) Applicant: **Huawei Technologies Co., Ltd.**
**Shenzhen, Guangdong 518129 (CN)**

(72) Inventor: **TANG, Yunshuai**
**Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **POSITIONING MEASUREMENT METHOD AND COMMUNICATION DEVICE**

(57) Embodiments of this application provide a communication method and a communication apparatus. The method includes: A transmitter generates a ranging frame, and sends the ranging frame through beam sweeping. In this manner, space diversity can be provided, a probability of separating a first path from an interference path is increased, and positioning accuracy is improved.

[FIG. 4]

## Description

This application claims priority to Chinese Patent Application No. 202210801700.5, filed on July 8, 2022 and entitled "POSITIONING MEASUREMENT METHOD AND COMMUNICATION APPARATUS", which is incorporated herein by reference in its entirety.

This application claims priority to Chinese Patent Application No. 202210922110.8, filed on August 2, 2022 and entitled "POSITIONING MEASUREMENT METHOD AND COMMUNICATION APPARATUS", which is incorporated herein by reference in its entirety.

## TECHNICAL FIELD

Embodiments of this application relate to the communication field, and more specifically, to a positioning measurement method and a communication apparatus.

## BACKGROUND

Wireless communication scenarios, especially indoor positioning scenarios, are usually multipath scenarios. Ranging/positioning accuracy is limited to multipath resolution. If a first path is interfered by an adjacent path, a large positioning error is caused.

How to improve ranging/positioning accuracy is an urgent problem to be resolved.

SUMMARY

Embodiments of this application provide a positioning measurement method and a communication apparatus.

According to a first aspect, a positioning measurement method is provided. The method may include: A transmitter generates a ranging frame, and the transmitter sends the ranging frame through beam sweeping.

According to the method provided in the foregoing embodiment, a transmitter sends a ranging frame through beam sweeping to provide space diversity, so as to increase a probability of separating a first path from an interference path, and improve positioning accuracy.

According to a second aspect, a positioning measurement method is provided. The method may include: A receiver receives and parses a ranging frame.

According to a third aspect, a communication apparatus is provided. The communication apparatus has a function of implementing the method in any one of the first aspect and the second aspect or the possible implementations of the first aspect and the second aspect. The function may be implemented by hardware, or may be implemented by hardware executing corresponding software. The hardware or the software includes one or more units corresponding to the foregoing function.

According to a fourth aspect, a communication apparatus is provided, including a processor and a memory. Optionally, the communication apparatus may further include a transceiver. The memory is configured to store a computer program, and the processor is configured to: invoke and run the computer program stored in the memory, and control the transceiver to receive/send a signal, to enable the communication apparatus to perform the method in any one of the first aspect and the second aspect or the possible implementations of the first aspect and the second aspect.

According to a fifth aspect, a communication apparatus is provided, including a processor and a communication interface. The communication interface is configured to: receive data and/or information, and transmit the received data and/or information to the processor. The processor processes the data and/or information. In addition, the communication interface is further configured to output data or information or both that are obtained through processing by the processor, so that the method in any one of the first aspect and the second aspect or the possible implementations of the first aspect and the second aspect is performed.

According to a sixth aspect, a computer-readable storage medium is provided. The computer-readable storage medium stores computer instructions. When the computer instructions are run on a computer, the method in any one of the first aspect to the third aspect or the possible implementations of the first aspect to the third aspect is performed.

According to a seventh aspect, a computer program product is provided. The computer program product includes computer program code. When the computer program code is run on a computer, the method according to any one of the first aspect to the third aspect or the possible implementations of the first aspect to the third aspect is performed.

According to an eighth aspect, a wireless communication system is provided, including the transmitter in the first aspect and/or the receiver in the second aspect.

## BRIEF DESCRIPTION OF DRAWINGS

FIG. 1 is a diagram of a communication system 100 applicable to an embodiment of this application;
FIG. 2 is a diagram of a format of a ranging PPDU;
FIG. 3 is a diagram of a true first path and a superimposed first path;
FIG. 4 is a diagram of a positioning measurement method 200 according to an embodiment of this application;
FIG. 5 is an example of receiving and sending a ranging frame;
FIG. 6 is a process of generating and sending a ranging frame at a transmitter;
FIG. 7 is a diagram of a positioning measurement method according to an embodiment of this application;
FIG. 8 is a block diagram of a communication apparatus according to an embodiment of this application; and
FIG. 9 is a block diagram of a communication device according to an embodiment of this application.

## DESCRIPTION OF EMBODIMENTS

The following describes the technical solutions of this application with reference to the accompanying drawings.

The technical solutions provided in embodiments of this application may be applicable to a wireless local area network (wireless local area network, WLAN) scenario, for example, support an IEEE 802.11-related standard, such as the 802.11a/b/g standard, the 802.11n standard, the 802.11ac standard, the 802.11ax standard, and a next-generation Wi-Fi protocol of the IEEE 802.11ax such as 802.11be, Wi-Fi 7, extremely high throughput (extremely high throughput, EHT), 802.11ad, 802.11ay, or 802.11bf, for another example, a next-generation standard of 802.11be and Wi-Fi 8, and may be further applied to an ultra-wideband (Ultra-wideband, UWB)-based wireless personal area network system and a sensing (sensing) system. For example, 802.11bf includes two major standards: low frequency (sub-7 GHz) and high frequency (60 GHz). An implementation of sub-7 GHz mainly depends on standards such as 802.11ac, 802.11ax, 802.11be, and a next-generation standard of 802.11be, and an implementation of 60 GHz mainly depends on standards such as 802.11ad, 802.11ay, and a next-generation standard of 802.11ay.

Although embodiments of this application are described mainly by using an example of a deployed WLAN network, especially a network to which the IEEE 802.11 system standard is applied, it is easy for a person skilled in the art to understand that various aspects in embodiments of this application may be extended to other networks that use various standards or protocols, for example, a high-performance radio local area network (high-performance radio local area network, HIPERLAN), a wireless wide area network (wireless wide area network, WWAN), a wireless personal area network (wireless personal area network, WPAN), or another network that is known currently or that develops in the future. Therefore, the various aspects provided in embodiments of this application are applicable to any suitable wireless network regardless of a used coverage area and a used wireless access protocol.

The technical solutions in embodiments of this application may be further applied to various communication systems, for example, a WLAN communication system, a Wireless Fidelity (wireless fidelity, Wi-Fi) system, a long term evolution (long term evolution, LTE) system, an LTE frequency division duplex (frequency division duplex, FDD) system, LTE time division duplex (time division duplex, TDD), a universal mobile telecommunications system (universal mobile telecommunications system, UMTS), a worldwide interoperability for microwave access (worldwide interoperability for microwave access, WiMAX) communication system, a 5th generation (5th generation, 5G) system or a new radio (new radio, NR) system, and a future 6th generation (6th generation, 6G) system, a wireless local area network system such as an Internet of things (Internet of things, IoT) network or vehicle-to-everything (vehicle to x, V2X).

The foregoing communication systems applicable to this application are merely examples for descriptions, and the communication systems applicable to this application are not limited thereto. This is uniformly described herein, and details are not described below.

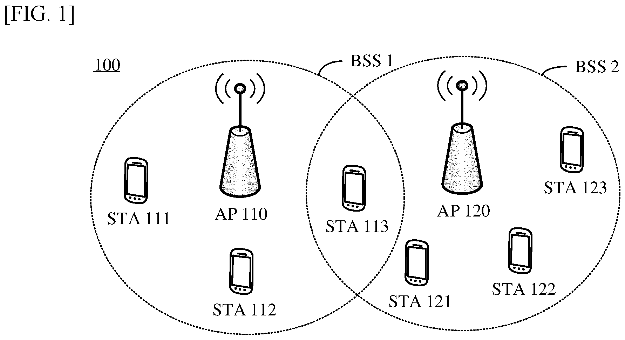

FIG. 1 is a diagram of a system architecture and an apparatus according to an embodiment of this application. (a) in FIG. 1 is an example of a system architecture 100 applicable to this embodiment of this application. As shown in (a) in FIG. 1, the system 100 includes an access point AP 110 and an access point AP 120. Optionally, the system may further include stations STA 111, STA 112, and STA 113 that are associated with the access point AP 110, and stations STA 121, STA 122, and STA 123 that are associated with the access point AP 2. The access point AP 110, the stations STA 111, STA 112, and STA 113 form a basic service set (basic service set, BSS) 1, and the access point AP 120, STA 121, STA 122 and STA 123 form a BSS 2.

For example, the system architecture shown in (a) in FIG. 1 may be applied to the Internet of things industry, the Internet of vehicles industry, the banking industry, an enterprise office, a stadium and an exhibition hall, a concert hall, a hotel room, a dormitory, a ward, a classroom, a supermarket, a plaza, a street, a production workshop, a warehousing, and the like.

The access point may be an access point used by a terminal (such as, a mobile phone) to access a wired (or wireless) network, and is mainly deployed at home, in a building, and in a park. A typical coverage radius is tens of meters to 100-odd meters. Certainly, the access point may alternatively be deployed outdoors. The access point is equivalent to a bridge that connects a wired network and a wireless network. A main function of the access point is to connect various wireless network clients together and then connect the wireless network to the Ethernet.

Specifically, the access point may be a terminal or a network device with a Wi-Fi chip. The network device may be a router, a relay station, a vehicle-mounted device, a wearable device, a network device in a 5G network, a network device in a future 6G network, a network device in a public land mobile network (public land mobile network, PLMN), or the like. This is not limited in this embodiment of this application. The access point may be a device that supports the 802.11be standard. Alternatively, the access point may be a device that supports a plurality of WLAN standards of the 802.11 family, such as 802.11ax, 802.11ac, 802.11n, 802.11g, 802.11b, 802.11a, and a next-generation standard of 802.11be. The access point in this application may be a high efficiency (high efficient, HE) AP, an extremely high throughput (extremely high throughput, EHT) AP, or an access point applicable to a specific generation Wi-Fi standard in the future.

The station may be a wireless communication chip, a wireless sensor, a wireless communication terminal, or the like, and may also be referred to as a user, user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. The station may be a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device, or another processing device connected to a wireless modem, a vehicle-mounted device, an Internet of things device, a wearable device, a terminal device in a 5G network, a terminal device in a future 6G network, a terminal device in a PLMN, or the like. This is not limited in this embodiment of this application. The station may support the 802.11be standard. Alternatively, the station may support the plurality of WLAN standards of the 802.11 family, such as 802.11ax, 802.11ac, 802.11n, 802.11g, 802.11b, 802.11a, and a next-generation standard of 802.11be.

It should be understood that the station in this application may be a non-access point station (non-AP STA).

For example, the access point or the station in this application may be a sensor node in a smart city, for example, a smart water meter, a smart electric meter, or a smart air detection node, or may be a smart device in smart home, for example, a smart camera, a projector, a display, a television, a speaker, a refrigerator, or a washing machine, or may be an entertainment terminal, for example, a wearable device such as virtual reality (virtual reality, VR) and augmented reality (augmented reality, AR), or may be a smart device in smart office, for example, a printer, a projector, a loudspeaker, or a speaker, or may be infrastructure in a daily life scenario, for example, a vending machine, a self-service navigation console in a supermarket, a self-service cashier device, or a self-service dining machine, or may be an Internet of vehicles device in the Internet of vehicles, a node in the Internet of things, or a device in a large-scale stadium or a music venue, or the like.

- "Vehicle-mounted wireless short-range communication system technology"/Green bud GT new protocol development. The protocol does not support positioning currently.
- Existing positioning technology (802.11 fine time measurement (fine time measurement, FTM), 802.11AZ, cellular network, and ultra-wideband (Ultra wideband, UWB) UWB) solutions that can be referenced are usually based on air interface propagation delay measurement. In a multipath channel condition, positioning accuracy is limited to multipath resolution (determined based on signal bandwidth).

- Multipath ranging accuracy is limited to the multipath resolution $-\frac{c}{B}$, where c indicates the speed of light and B indicates a signal bandwidth.
- An upper limit of LOS single-path ranging accuracy is:

$$\frac{3}{2}\left(\frac{c}{\pi B}\right)^2 \frac{1}{\left(\frac{E_s}{\sigma_{N_0}^2}\right)}$$

- When a bandwidth is 160 M, upper limits of single-path ranging accuracy and multipath ranging accuracy respectively are 1.87 m (an upper limit of the single-path ranging accuracy can reach dozens of decimeters through some enhancement and filtering) and 5 cm.
- An increasing number of communication devices have a plurality of antennas.

A first version of the protocol of "vehicle-mounted short-distance wireless communication system technology" (SparkLink wireless communication system/wireless short-distance communication vehicle-mounted air interface technology) does not support positioning measurement. There is a high probability that this function will be added in a later version.

According to a MIMO ranging solution in 802.11az, a transmitter sends NTx (quantity of transmit antennas) pilot symbols (HE-LTF), and a receiver performs MIMO channel estimation by solving an orthogonal P matrix. 11az supports N repeated transmissions. In an actual test, a signal-to-noise ratio (Signal-to-Noise Ratio, SNR) improved through N repetitions has very limited effect on ranging performance.

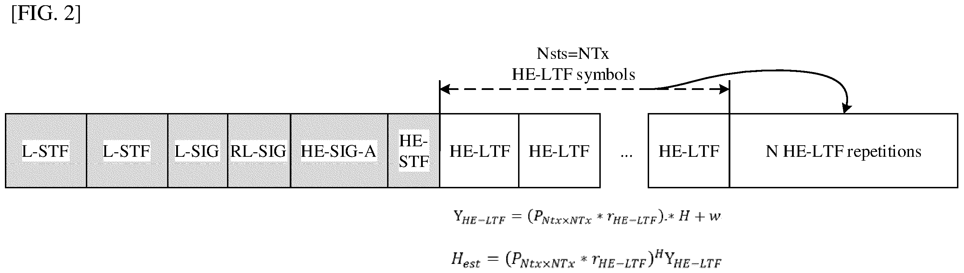

FIG. 2 is a diagram of a format of a ranging PPDU. Meanings of English abbreviations are: legacy short training field (Legacy Short Training Field, L-STF), legacy signal field (Legacy Signal Field, L-SIG), repeated legacy signal field (Repeated L-SIG, RL-SIG), and HE (High Efficient, high efficient).

Wireless communication scenarios, especially indoor positioning scenarios, are usually multipath scenarios. Ranging/positioning accuracy is limited to multipath resolution. If a first path is interfered by an adjacent path, a large positioning error is caused.

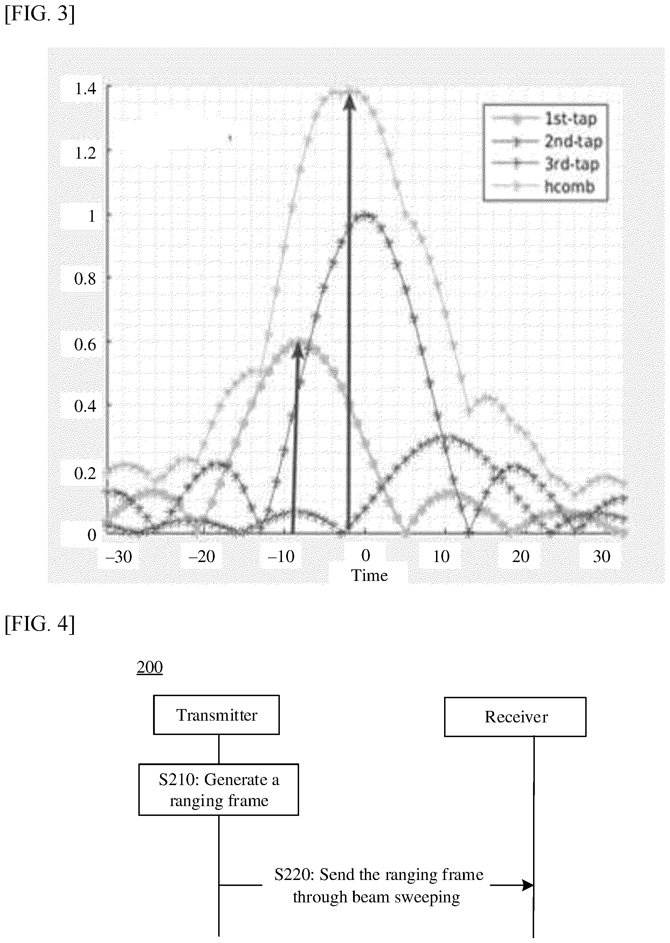

FIG. 3 is a diagram of a true first path and a superimposed first path. A green line shown in FIG. 3 is the true first path, but a first path (a yellow line) obtained by superimposing three paths has a relatively large deviation.

A spatial spectrum estimation method (such as a multiple signal classification (Multiple Signal Classification, MUSIC) algorithm) may be used to separate multiple paths, but calculation is excessively complex and difficult to implement.

This application mainly resolves (but is not limited to) a problem that ranging accuracy is limited and a spatial spectrum estimation algorithm is excessively complex and difficult to implement under a multipath condition of a "vehicle-mounted wireless short-distance communication system technology".

FIG. 4 is a diagram of a positioning measurement method 200 according to an embodiment of this application. As shown in FIG. 4, the method 200 includes the following steps.

S210: A transmitter generates a ranging frame.

S220: The transmitter sends the ranging frame through beam sweeping. Correspondingly, a receiver receives the ranging frame.

According to the method provided in the foregoing embodiment, a transmitter sends a ranging frame through beam sweeping to provide space diversity, so as to increase a probability of separating a first path from an interference path, and improve positioning accuracy.

Optionally, the method further includes S230: The receiver parses the ranging frame.

Optionally, in an implementation, the method 200 further includes: The transmitter continuously sends ranging frames, where different ranging frames are sent through different beams/antennas.

Optionally, in an implementation, the method 200 further includes: The transmitter may broadcast or send a beam ID or a beam direction of the ranging frame to a peer end, so as to perform angle of departure (Angle of Departure, AoD) measurement.

Optionally, in an implementation, the method 200 further includes: The receiver may feed back a beam ID or a ranging frame sequence number of a detected first path to the transmitter (equivalent to feeding back an AoD).

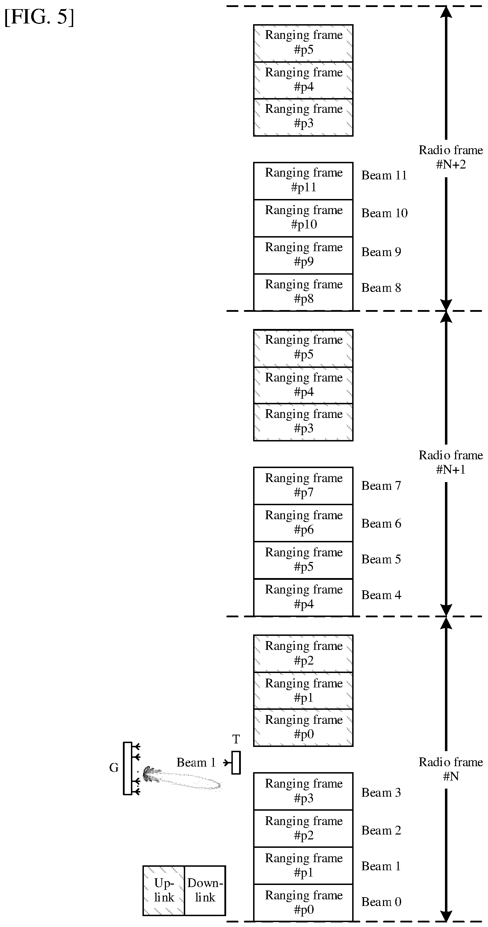

FIG. 5 is an example of receiving and sending a ranging frame.

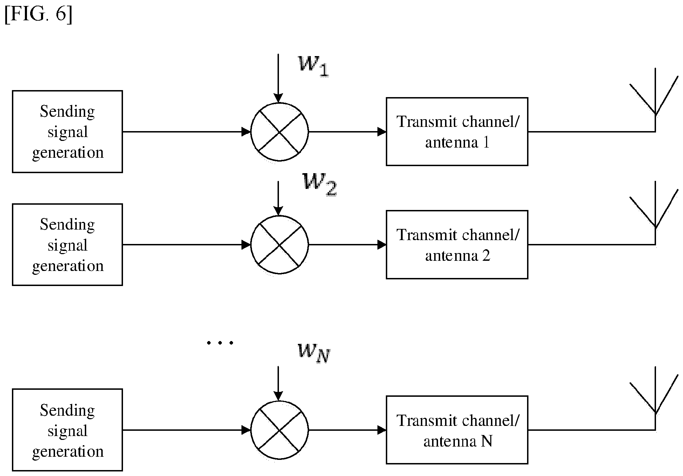

FIG. 6 is a process of generating and sending a ranging frame at a transmitter. As shown in FIG. 6, the transmitter sends a ranging frame through a plurality of antennas, and sends different symbols through different antenna ports (beams). In FIG. 6, $w_i$ is a beam vector (which may be 0).

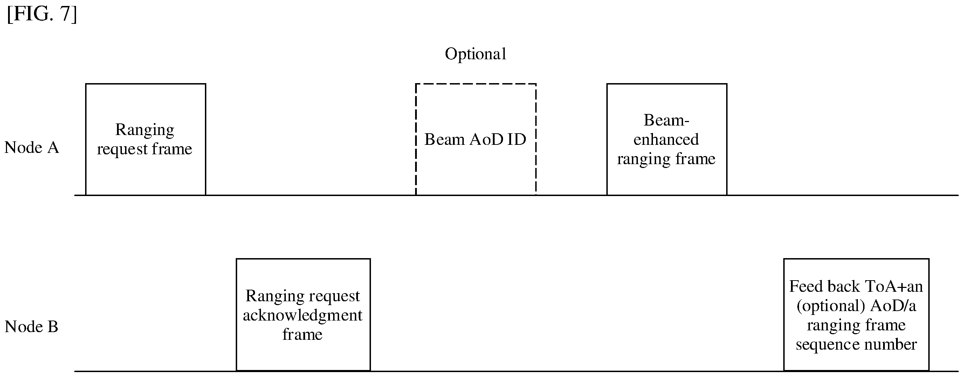

In this application, first path detection is performed through space diversity provided by different beams, and a first path ranked high is a true first path. Specifically, FIG. 7 is a diagram of a positioning measurement method according to an embodiment of this application. As shown in FIG. 7, to generate different beams, a transmitter needs to perform antenna calibration to obtain an AoD angle of each beam. The AoD corresponding to each beam is notified to a peer end when necessary. A receiver (a node B in FIG. 7) feeds back a beam ID or a ranging frame sequence number corresponding to a detected first path.

In this application, space diversity is provided by sending a ranging frame through beam sweeping, so as to increase a probability of separating a first path from an interference path, and improve positioning accuracy.

In addition, this application can provide AoD estimation through beam sweeping, combined with time of arrival (Time of arrival, ToA)/time of departure (time of Departure, ToD) ranging to implement single-station positioning (or improve multi-station positioning accuracy/efficiency).

In this application, a ranging frame is sent through beam sweeping, to increase a probability of separating a first path from an adjacent interference path, and improve positioning accuracy.

In this application, a transmitter continuously sends ranging frames, where different ranging frames are sent through different beams/antenna ports.

In this application, the transmitter may broadcast and send a beam ID or a beam direction of the ranging frame to a peer end, so as to perform AoD measurement.

In this application, a receiver may feed back a beam ID or a ranging frame sequence number of a detected first path to the transmitter (equivalent to feeding back an AoD).

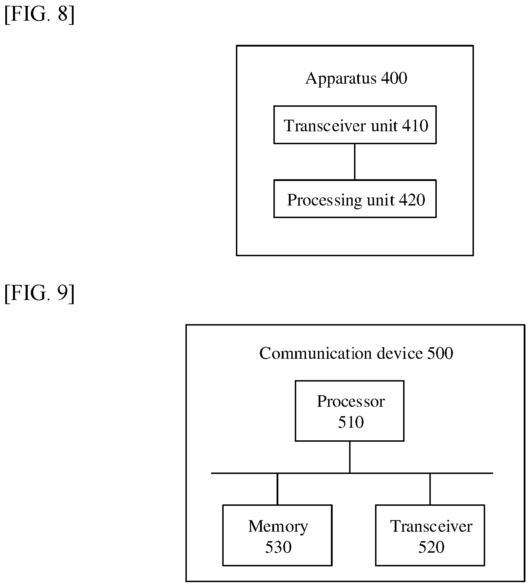

With reference to FIG. 8 and FIG. 9, the following describes communication apparatuses provided in embodiments of this application.

FIG. 8 is a block diagram of a communication apparatus according to an embodiment of this application. As shown in FIG. 8, an apparatus 400 may include a transceiver unit 410 and a processing unit 420. The transceiver unit 410 may communicate with the outside, and the processing unit 420 is configured to perform data processing. The transceiver unit 410 may also be referred to as a communication interface or a communication unit.

In a possible design, the apparatus 400 may be the first device in the foregoing method embodiments, or may be a chip configured to implement a function of the first device in the foregoing method embodiments. The apparatus 400 may include a unit configured to perform the method performed by the device 1 in FIG. 3.

In another possible design, the apparatus 400 may be the second device in the foregoing method embodiments, or may be a chip configured to implement a function of the second device in the foregoing method embodiments. The apparatus 400 may include a unit configured to perform the method performed by the device 2 in FIG. 3.

It should be understood that the foregoing content is merely used an example for understanding. The apparatus 400 can further implement another step, action, and method that are related to the receiver in the method embodiments. Details are not described herein.

FIG. 9 is a block diagram of a communication device 500 according to an embodiment of this application. As shown in FIG. 9, the communication device 500 includes at least one processor 510 and a transceiver 520. The processor 510 is coupled to a memory, and is configured to execute instructions stored in the memory, to control the transceiver 520 to send a signal and/or receive a signal. Optionally, the communication device 500 further includes a memory 530 configured to store instructions.

It should be understood that the processor 510 and the memory 530 may be integrated into one processing apparatus. The processor 510 is configured to execute program code stored in the memory 530, to implement the foregoing functions. During specific implementation, the memory 530 may alternatively be integrated into the processor 510, or may be independent of the processor 510.

It should be further understood that the transceiver 520 may include a receiver (or referred to as a receiver machine) and a transmitter (or referred to as a transmitter machine). The transceiver 520 may further include an antenna. There may be one or more antennas. The transceiver 1020 may alternatively be a communication interface or an interface circuit.

When the communication device 500 is a chip, the chip includes a transceiver unit and a processing unit. The transceiver unit may be an input/output circuit or a communication interface. The processing unit may be a processor, a microprocessor, or an integrated circuit that is integrated on the chip. An embodiment of this application further provides a processing apparatus, including a processor and an interface. The processor may be configured to perform the methods in the foregoing method embodiments.

It should be understood that the processing apparatus may be a chip. For example, the processing apparatus may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a microcontroller unit (microcontroller unit, MCU), a programmable controller (programmable logic device, PLD), or another integrated chip.

In an implementation process, steps in the foregoing methods can be implemented by using an integrated logic circuit of hardware in the processor, or by using instructions in a form of software. The steps of the methods disclosed with reference to embodiments of this application may be directly performed by a hardware processor, or may be performed by a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein.

An embodiment of this application further provides a computer-readable storage medium. The computer-readable storage medium stores computer instructions used to implement the method performed by the first device or the second device in the foregoing method embodiments.

An embodiment of this application further provides a computer program product including instructions. When the instructions are executed by a computer, the computer is enabled to implement the method performed by the first device or the second device in the foregoing method embodiments.

This application further provides a system, including the first device and/or the second device.

All or some of the foregoing embodiments may be implemented by using software, hardware, firmware, or any combination thereof. When software is used to implement embodiments, all or some of the embodiments may be implemented in a form of a computer program product. The computer program product includes one or more computer instructions. When the computer instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid-state drive (solid-state drive, SSD)), or the like.

In embodiments of this application, the term such as "example" or "for example" is used to give an example, an illustration, or a description. Any embodiment or design scheme described as an "example" in this application should not be explained as being more preferred or having more advantages than another embodiment or design scheme. Exactly, the term "example" is used to present a concept in a specific manner.

It should be understood that, an "embodiment" mentioned throughout this specification means that particular features, structures, or characteristics related to this embodiment are included in at least one embodiment of this application. Therefore, embodiments in the specification do not necessarily refer to a same embodiment. In addition, these particular features, structures, or characteristics may be combined in one or more embodiments in any appropriate manner.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application. Names of all nodes and messages in this application are merely names set for ease of description in this application, and may be different in an actual network. It should not be understood that the names of various nodes and messages are limited in this application. On the contrary, any name that has a same or similar function as the node or the message used in this application is considered as a method or an equivalent replacement in this application, and falls within the protection scope of this application.

It should be further understood that, in this application, both "when" and "if" mean that UE or a base station performs corresponding processing in an objective situation, but do not constitute any limitation on time, do not require the UE or the base station to perform a determining action during implementation, and do not mean another limitation either.

It should be noted that, in embodiments of this application, "presetting", "preconfiguring", or the like may be implemented by prestoring corresponding code or a table in a device (for example, a terminal device), or in another manner that may indicate related information. A specific implementation of "presetting", "preconfiguring", or the like is not limited in this application, for example, a preset rule or a preset constant in embodiments of this application.

In addition, the terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists.

The term "at least one of..." in this specification represents all or any combination of listed items. For example, "at least one of A, B, and C" may represent the following six cases: Only A exists, Only B exists, Only C exists, both A and B exist, both B and C exist, and all A, B, and C exist. In this specification, "at least one" means one or more. "A plurality of" means two or more.

It should be understood that in embodiments of this application, "B corresponding to A" indicates that B is associated with A, and B may be determined based on A. However, it should be further understood that determining B based on A does not mean that B is determined based only on A. B may alternatively be determined based on A and/or other information. The terms "include", "comprise", "have", and their variants all mean "include but are not limited to", unless otherwise specifically emphasized in another manner.

It should be understood that, in various embodiments of this application, first, second, and various numbers are merely used for distinguishing for ease of description, for example, differentiating different information and the like, and are not used to limit the scope of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for convenient and brief description, for a detailed working process of the foregoing system, apparatus, and unit, refer to a corresponding process in the foregoing method embodiments. Details are not described herein.

In the several embodiments provided in this application, it should be understood that the disclosed system, apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for indicating a computing device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

An embodiment of this application further provides a ranging method, including the following steps.

Step 1: A transmitter generates a beam-enhanced ranging frame. The beam-enhanced ranging frame may be a ranging frame in the foregoing embodiment.

Step 2: The transmitter sends the beam-enhanced ranging frame. Correspondingly, a receiver receives the beam-enhanced ranging frame.

According to the method provided in the foregoing embodiment, a transmitter sends a beam-enhanced ranging frame to provide space diversity, so as to increase a probability of separating a first path from an interference path, and improve positioning accuracy.

In a possible implementation, the beam-enhanced ranging frame may be scheduled by dynamic scheduling data control information. Specifically, an extended physical layer identifier mask may indicate extended dynamic scheduling data control information (or indicate that a type of the dynamic scheduling data control information is extended dynamic scheduling data control information). The extended dynamic scheduling data control information may be resource scheduling information of the beam-enhanced ranging frame.

Optionally, the extended dynamic scheduling data control information includes one or more of the following: an extended scheduling information type, link type indication information, a cross-superframe scheduling indication, a quantity of space-time streams of ranging frames, a quantity of beam-enhanced symbols, a quantity of repetitions of a ranging frame, a 20 M carrier ranging enable indication, start radio frame indication information, a radio frame length indication, an indication that a beam switching symbol needs to be added between two beams, or an extended physical layer identifier mask.

Optionally, a quantity of bits of each piece of information and a related characteristic are as follows.

4 bits: an extended scheduling information type. 0001 indicates scheduling information of a beam-enhanced ranging frame.

1 bit: link type indication information. 0 indicates G-link transmission, or 1 indicates T-link transmission.

1 bit: a cross-superframe scheduling indication. 0 indicates that control information and a resource scheduled for the control information are located in a same superframe, or 1 indicates that a resource scheduled for control information is located in an adjacent superframe following a superframe in which the control information is located.

4 bits: a quantity of space-time streams of a first part of ranging frames $N_{ss,rang}$ - 1.

6 bits: a quantity of beam-enhanced symbols (repeated transmission is not considered).

3 bits: a quantity of repetitions of a ranging frame $N_{rep,rang}$. If a field value is changed to v, $N_{rep,rang} = 2^v$.

8 bits: a 20 M carrier ranging enable indication. A maximum of eight 20 M can be indicated.

3 bits: start radio frame indication information. In a scheduled superframe, a start radio frame is #(3-bit value×6) radio frames.

3 bits: a radio frame length indicator. From a start radio frame, duration lasts for (3-bit value+1)×6 radio frames.

1 bit: indicates that a beam switching symbol needs to be added between two beams.

24 bits: means that a cyclic redundancy check sequence is calculated by using a cyclic redundancy check generator polynomial $g_{CRC24B}(D)$, and a 24-bit extended physical layer identifier mask is added. The extended physical layer identifier mask is configured by a higher layer.

An exclusive OR operation may be performed on the mask and the cyclic redundancy check sequence.

In a possible implementation, "semi-persistent scheduling data information transmission resource activation/-deactivation information" may be reused to allocate a resource to the beam-enhanced ranging frame or to schedule the beam-enhanced ranging frame. Specifically, the "semi-persistent scheduling data information transmission resource activation/deactivation information" may be reused to activate or deactivate semi-persistent scheduling data information transmission resource configuration configured by a higher layer. A resource in activated semi-persistent scheduling data information transmission resource configuration may be used to transmit a beam-enhanced ranging frame. A resource in deactivated semi-persistent scheduling data information transmission resource configuration cannot be used to transmit a beam-enhanced ranging frame.

Specifically, a node 1 may allocate, through a higher layer signaling, a plurality of semi-persistent scheduling data information transmission resource configuration identifiers and semi-persistent scheduling data information transmission resource configuration corresponding to each identifier to a node 2. The node 2 receives and stores the resource configuration and the corresponding identifier. However, the node 2 may not activate or use a resource. The node 1 activates or deactivates, by sending semi-persistent scheduling data information transmission resource information, the resource that is used for transmitting the semi-persistent scheduling data information and that is stored in the node 2.

Before step 1 in this embodiment, the transmitter may send indication information to the receiver. The indication information may indicate a ranging capability and/or a beam-enhanced ranging capability.

In a possible implementation, a communication domain system message carries a ranging capability indication and/or a beam-enhanced ranging capability indication.

Optionally, the communication domain system message is extended as follows:

```
DomainSysInfo ::= SEQUENCE {
        criticalExtensions                              CHOICE {
                domainSysInfo                                   DomainSysInfo-IEs,
                criticalExtensionsFuture        SEQUENCE {}
        }
}


DomainSysInfo-IEs ::= SEQUENCE {
        domainName                      DomainName      OPTIONAL,    -- Need OR
        domainID                        DomainID                OPTIONAL,
-- Need OR
        carrierChannelConf      CarrierChannelConf,
        nonContentionAccessResource  NonContentionAccessResourceOPTIONAL,    -- Need OR
        contentionAccessResource        ContentionAccessResource,
        p0-NominalValue                 P0-NominalValue,
        ack-ResourceSetConf             ACK-ResourceSetConf
        domainCoordination              DomainCoordination              OPTIONAL,
-- Need OR
        accessControl                   BIT STRING (SIZE (4))   OPTIONAL,              --
Need OR
        keyAlgNegotiation       BIT STRING (SIZE (32)),
        rangingCapability               RangingCapability
        nonCriticalExtension            SEQUENCE {}                     OPTIONAL       --
Need OR
        }
```

The RangingCapability occupies 2 bits. 1 bit indicates whether ranging is supported; or 1 bit indicates whether a beam-enhanced ranging frame is supported.

In a possible implementation, a T-node capability feedback message carries a ranging capability indication and/or a beam-enhanced ranging capability indication.

Optionally, the T-node capability feedback message is extended as follows:

```
TNodeCapabilityFeedback ::= SEQUENCE {
        xrc-Identifier                          XRC-Identifier,
        criticalExtensions                      CHOICE {
                tNodeCapabilityFeedback         TNodeCapabilityFeedback-IEs,
                criticalExtensionsFuture    SEQUENCE {}
        }
}


TNodeCapabilityFeedback-IEs ::= SEQUENCE {
        modulationCap           ENUMERATED {qam1024}        OPTIONAL,
        longGAP                 LongGAP                     OPTIONAL,
        supportingSegmentation  SupportingSegmentation      OPTIONAL,
        c-MaxLayer              ENUMERATED {layer4, layer8},
        t-MaxLayer              ENUMERATED {layer2},
        cbg-Feedback            CBG-Feedback                OPTIONAL,
        mixCBG-Transmission     MixCBG-Transmission         OPTIONAL,
        noGAP-Measurement       NoGAPMeasurement            OPTIONAL,
        rangingCapability       RangingCapability
        nonCriticalExtension    SEQUENCE {}                 OPTIONAL
}
```

The RangingCapability may occupy 3 bits. 1 bit indicates whether ranging is supported; 1 bit indicates whether a beam-enhanced ranging frame is supported; or 1 bit indicates whether a beam switching symbol is needed.

Further, the ranging method provided in this embodiment of this application further includes step 3: The transmitter receives a beam-enhanced ranging result report frame. The report frame is configured to report a beam-enhanced ranging result. The report frame includes ToA/ToD or ToD-ToA, AoA, beam selection information, and the like.

## Claims

1. A positioning measurement method, comprising:

   generating, by a transmitter, a ranging frame; and
   sending, by the transmitter, the ranging frame through beam sweeping.

2. A positioning measurement method, comprising:

   receiving, by a receiver, a ranging frame; and
   parsing, by the receiver, the ranging frame.

3. A communication apparatus, comprising:

   a processor, configured to execute a computer program stored in a memory, to enable the apparatus to perform the method according to claim 1 or 2.

4. The apparatus according to claim 3, wherein the apparatus further comprises the memory.

5. A computer-readable storage medium, wherein the computer-readable storage medium stores a computer program, and when the computer program is run on a computer, the computer is enabled to perform the method according to claim 1 or 2.

6. A computer program product, wherein the computer program product comprises instructions for performing the method according to claim 1 or 2.

[FIG. 1]

[FIG. 2]

Nsts=NTx
HE-LTF symbols

| L-STF | L-STF | L-SIG | RL-SIG | HE-SIG-A | HE-STF | HE-LTF | HE-LTF | ... | HE-LTF | N HE-LTF repetitions |

$$Y_{HE-LTF} = (P_{Ntx \times NTx} * r_{HE-LTF}).* H + w$$

$$H_{est} = (P_{Ntx \times NTx} * r_{HE-LTF})^H Y_{HE-LTF}$$

**EP 4 529 032 A1**

[FIG. 3]

[FIG. 4]

15

[FIG. 5]

| | |
|---|---|
| Ranging frame #p5 | |
| Ranging frame #p4 | |
| Ranging frame #p3 | |

| | |
|---|---|
| Ranging frame #p11 | Beam 11 |
| Ranging frame #p10 | Beam 10 |
| Ranging frame #p9 | Beam 9 |
| Ranging frame #p8 | Beam 8 |

Radio frame #N+2

| | |
|---|---|
| Ranging frame #p5 | |
| Ranging frame #p4 | |
| Ranging frame #p3 | |

| | |
|---|---|
| Ranging frame #p7 | Beam 7 |
| Ranging frame #p6 | Beam 6 |
| Ranging frame #p5 | Beam 5 |
| Ranging frame #p4 | Beam 4 |

Radio frame #N+1

| | |
|---|---|
| Ranging frame #p2 | |
| Ranging frame #p1 | |
| Ranging frame #p0 | |

T

G    Beam 1 →

| | |
|---|---|
| Ranging frame #p3 | Beam 3 |
| Ranging frame #p2 | Beam 2 |
| Ranging frame #p1 | Beam 1 |
| Ranging frame #p0 | Beam 0 |

Radio frame #N

| Up-link | Down-link |
|---|---|

16

[FIG. 6]

$w_1$

Sending signal generation → ⊗ → Transmit channel/ antenna 1 →

$w_2$

Sending signal generation → ⊗ → Transmit channel/ antenna 2 →

· · ·

$w_N$

Sending signal generation → ⊗ → Transmit channel/ antenna N →

[FIG. 7]

Optional

Node A: Ranging request frame — Beam AoD ID — Beam-enhanced ranging frame

Node B: Ranging request acknowledgment frame — Feed back ToA+an (optional) AoD/a ranging frame sequence number

EP 4 529 032 A1

[FIG. 8]

Apparatus 400

Transceiver unit 410

Processing unit 420

[FIG. 9]

Communication device 500

Processor
510

Memory
530

Transceiver
520

**INTERNATIONAL SEARCH REPORT**

| International application No. |
|---|
| **PCT/CN2023/103889** |

| **A.** | **CLASSIFICATION OF SUBJECT MATTER** |
|---|---|
| | H04B7/0408(2017.01)i |

According to International Patent Classification (IPC) or to both national classification and IPC

| **B.** | **FIELDS SEARCHED** |
|---|---|

Minimum documentation searched (classification system followed by classification symbols)

    IPC:H04B,H04L,H04W

Documentation searched other than minimum documentation to the extent that such documents are included in the fields searched

Electronic data base consulted during the international search (name of data base and, where practicable, search terms used)

    CNTXT, ENTXTC, EXTXT, VEN: 波束扫描, 波束赋形, 测距, 距离, 定位, 帧, 信号, 离开角, 到达角, beam sweep+, beam scan+, beam form+, AOA, AOD, range, distance, locat+, frame, signal

| **C.** | **DOCUMENTS CONSIDERED TO BE RELEVANT** | |
|---|---|---|

| Category* | Citation of document, with indication, where appropriate, of the relevant passages | Relevant to claim No. |
|---|---|---|
| X | WO 2022103962 A2 (GOOGLE L.L.C.) 19 May 2022 (2022-05-19)<br>    description, paragraphs 53-55, 74, and 75 | 1-6 |
| X | CN 103856894 A (BEIJING SAMSUNG TELECOM RESEARCH & DEVELOPMENT CENTER et al.) 11 June 2014 (2014-06-11)<br>    description, paragraphs 9-12 | 1-6 |
| X | CN 111314952 A (CHENGDU HUAWEI TECHNOLOGIES CO., LTD.) 19 June 2020 (2020-06-19)<br>    description, paragraphs 182-187 | 1-6 |
| X | CN 111435887 A (TELECOMMUNICATIONS SCIENCE AND TECHNOLOGY RESEARCH INSTITUTE CO., LTD.) 21 July 2020 (2020-07-21)<br>    description, paragraphs 204-209 | 1-6 |
| A | CN 111526575 A (HUAWEI TECHNOLOGIES CO., LTD.) 11 August 2020 (2020-08-11)<br>    entire document | 1-6 |
| A | CN 113765550 A (HUAWEI TECHNOLOGIES CO., LTD.) 07 December 2021 (2021-12-07)<br>    entire document | 1-6 |

☐ Further documents are listed in the continuation of Box C.     ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **21 September 2023** | **07 October 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| PCT/CN2023/103889 |

| Patent document cited in search report | | | Publication date (day/month/year) | Patent family member(s) | | | Publication date (day/month/year) |
|---|---|---|---|---|---|---|---|
| WO | 2022103962 | A2 | 19 May 2022 | None | | | |
| CN | 103856894 | A | 11 June 2014 | None | | | |
| CN | 111314952 | A | 19 June 2020 | EP | 3886484 | A1 | 29 September 2021 |
| | | | | US | 2021306895 | A1 | 30 September 2021 |
| | | | | WO | 2020119727 | A1 | 18 June 2020 |
| CN | 111435887 | A | 21 July 2020 | None | | | |
| CN | 111526575 | A | 11 August 2020 | JP | 2022518856 | A | 16 March 2022 |
| | | | | EP | 3910990 | A1 | 17 November 2021 |
| | | | | US | 2021359813 | A1 | 18 November 2021 |
| | | | | WO | 2020156484 | A1 | 06 August 2020 |
| | | | | CN | 113873632 | A | 31 December 2021 |
| CN | 113765550 | A | 07 December 2021 | WO | 2021244532 | A1 | 09 December 2021 |
| | | | | US | 2023096819 | A1 | 30 March 2023 |
| | | | | EP | 4170917 | A1 | 26 April 2023 |

Form PCT/ISA/210 (patent family annex) (July 2022)

**EP 4 529 032 A1**

**REFERENCES CITED IN THE DESCRIPTION**

**Patent documents cited in the description**

- CN 202210801700

- CN 202210922110